# EUROPEAN PATENT APPLICATION

(11) **EP 3 828 050 A1**
(43) Date of publication of application: **02.06.2021**
(21) Application number: 19211778.6
(22) Date of filing: 27.11.2019
(51) Int. Cl.: B60W 30/14

(54) **STEPWISE ACCELERATION OF A CURRENT SPEED OF A VEHICLE**

(71) Applicant: Siemens Aktiengesellschaft, 80333 München (DE)
(72) Inventor: Krautwurm, Florian, 81669 München (DE)

(57) **Abstract**

The invention is directed to Computer-implemented method for stepwise accelerating a current speed (10) of a vehicle, comprising the steps a. accelerating the current speed (10) of the vehicle until a current number of a unit of measure of the current speed (10) reaches at least one predefined speed step (20) (S1); b. stopping the acceleration of the current speed (10) of the vehicle, if the current number of the unit of measure of the current speed (10) equals or exceeds the at least one predefined speed step (20) (S2); and c.maintaining the current speed (10) of the vehicle with the at least one predefined speed step (20) after performing a predefined action (30) (S3) ; and d. overcoming the at least one predefined speed step and accelerating the current speed (10) of the vehicle after performing a predefined action (40) (S4). Further, the invention relates to computer program product and a vehicle configuration unit.

## Description

### 1. Technical field

The present invention relates to a computer-implemented method for stepwise accelerating a current speed of a vehicle. Further, the invention relates to a corresponding computer program product and vehicle configuration unit.

### 2. Prior art

Diverse automobiles or cars, including autonomous vehicles, such as driverless automobiles are known from the prior art. Autonomous vehicles gain in importance. The autonomous vehicles are configured to operate in an autonomous mode in which the vehicle navigates through an environment with little or no input from a driver. Such a vehicle typically includes one or more sensors that are configured to sense information about the environment. The vehicle may use the sensed information to navigate through the environment. For example, if the sensors sense that the vehicle is approaching an obstacle, the vehicle may navigate around the obstacle.

To date, however, the adaptation of the current speed of the vehicle is time-consuming and inconvenient for the driver. The driver has to manually hold and adapt the speed using the gas pedal of the vehicle or cruise control. For example, considering the gas pedal, the driver has to press down the gas pedal for acceleration and lay off the gas pedal for deceleration many times while driving the vehicle. The current speed has to be adapted e.g. every time the speed limit changes or any other acceleration or deceleration is required due to the environment or other circumstances, as the aforementioned obstacles or traffic.

Hence, there is an increasing need for an improved approach to overcome the limitations of the gas pedal and cruise control as well as an approach which is suitable for autonomous vehicles.

It is therefore an objective of the invention to provide a computer-implemented method for stepwise accelerating a current speed of a vehicle in an efficient and reliable manner.

### 3. Summary of the invention

This problem is according to one aspect of the invention solved by a computer-implemented method for stepwise accelerating a current speed of a vehicle, comprising the steps:
a. accelerating the current speed of the vehicle until a current number of a unit of measure of the current speed reaches at least one predefined speed step;
b. stopping the acceleration of the current speed of the vehicle, if the current number of the unit of measure of the current speed equals or exceeds the at least one predefined speed step; and
c. maintaining the current speed of the vehicle with the at least one predefined speed step; and
d. overcoming the at least one predefined speed step and accelerating the current speed of the vehicle after performing a predefined action.

Accordingly, the invention is directed to a computer-implemented method for stepwise accelerating a current speed of a vehicle.

Exemplary embodiments may relate to an automobile or car, including autonomous vehicles, such as driverless automobiles. The autonomous vehicle can be configured for active sensing. In particular, the autonomous vehicle may include various sensors, which provide information that the autonomous vehicle may use for various control processes.

Thereby, the current speed is the speed of the vehicle in a current number of a unit of measure. The unit of measure can differ between the countries or states. For example, the unit of measure in Germany is kilometers per hour, but in USA miles. Thus, the unit of measure can be flexibly set to kilometers, miles or any other unit of measure depending on the country or other requirements.

In a first step, the current speed of the vehicle e.g. car in the unit of measure e.g. number of kilometers per hour is accelerated until reaching the predefined speed step e.g. 30 km/h. The speed step can be equally referred to a speed threshold or reference, and thus also a number of kilometers.

In a second step, after reaching the predefined speed step, the current speed of the vehicle is no further accelerated, but the acceleration is stopped, in this case at 30 km/h.

While performing no action or measure, the current speed is maintained. Accordingly, the vehicle drives constantly 30 km/h without any further acceleration or deceleration. In other words, the acceleration is deactivated or disabled. In a last step, after performing an action or measure, the speed step can be overcome and the acceleration continues. According to an embodiment, the acceleration continues until reaching another predefined speed step, if a next step is configured.

This way, the acceleration of the speed of the vehicle can be controlled in an efficient and reliable manner without any user interaction. Contrary to prior art, the aforementioned limitations and disadvantages of the use of the gas pedal by the driver of the vehicle or use of the cruise control of the vehicle can be overcome. The manual adaptation of the acceleration is no longer required.

The method according to the invention can be flexibly applied to any vehicle, such as autonomous cars, since the steps are performed automatically. Considering autonomous driving and the according autonomous cars as final product solutions, the safety of the operator and car can be significantly increased using the controlled and reliable stepwise acceleration. Accidents can be prevented from the very beginning taking the operator's needs into account and especially the country-specific speed limits.

In one aspect the method further comprises the step repeating the steps a. to c. for each predefined speed step of a plurality of predefined speed steps; wherein
the plurality of predefined speed steps is an ordered array of predefined speed steps, starting with the lowest predefined speed step and ending with the highest predefined speed step; wherein
the lowest predefined speed step corresponds to the lowest number of the unit of measure of the speed in the array; and the highest predefined speed step corresponds to the highest number of the unit of measure of the speed in the array.

Accordingly, a plurality of speed steps can be predefined. Referring to the aforementioned example, the lowest predefined speed step can be 30 km/h and the highest predefined speed step can be 120 km/h for the vehicle. The steps a. to c. are performed for the 30 km/h, as explained further above and repeated for the further speed steps, including the 120 km/h. In other words, the acceleration of the current speed of the vehicle is automatically stopped in a stepwise manner, at 30 km/h, ..., and 120 km/h.

In one aspect the at least one predefined speed step is a recommended speed limit of at least one country in an associated unity of measure or is free configurable by a user. Accordingly, the predefined speed steps can correspond to recommended speed limits of the country of interest. Referring to the aforementioned example, the recommended speed limits include 30 km/h for settlement areas or cities and 120 km/h for the highways. Alternatively, the predefined speed steps can be configured by a user, such as the driver or any other expert, e.g. 20 km/h instead of 30 km/h. The advantage is that country-specific requirements or other restrictions can be met increasing the operator's safety.

In one aspect performing the predefined action in step d. is; selected from the group comprising:
Pressing a button on a touchscreen or other means of the vehicle by a user; and
Performing a kickdown by the user.

Accordingly, the maintenance of the current speed depends on the performance of an action or measure. As explained, after performing an action or measure, the speed step can be overcome and the acceleration continues. Thereby, the kickdown refers to pressing down the gas pedal of the vehicle, whereas kickup refers to the opposite, namely, laying off the gas pedal. Distinct actions can be flexibly chosen depending on the underlying vehicle and user requirements.

In one aspect the method steps a. to d. are performed depending on a stepwise mode;
Enabling the performance of the method steps, if the stepwise mode is activated;
Disabling the performance of the method steps, if the stepwise mode is deactivated or after a kickup by the user.

In one aspect the stepwise mode can be set and/or adapted by the user.

Accordingly, an operating mode can be selected, set and also adapted by the user. The operating mode can switch between the normal mode and the stepwise mode. In the normal mode the performance of the method steps according to the invention is disabled. Thus, the driver of the vehicle can use the gas pedal for acceleration and deceleration or can use cruise control according to prior art, as usual. In the stepwise mode, the performance of the method steps is enabled or activated. Hence, the current speed of the car is accelerated in the stepwise manner according to the invention.

However, according to an embodiment, after performing the aforementioned kickup by the user, the operating mode is automatically switched to normal mode for safety reasons.

A further aspect of the invention is a computer program product directly loadable into an internal memory of a computer, comprising software code portions for performing the steps according to the aforementioned method when said computer program product is running on a computer.

A further aspect of the invention is a vehicle configuration unit for performing any of the aforementioned method steps.

### 4. Short description of the drawings

In the following detailed description, presently preferred embodiments of the invention are further described with reference to the following figures:
- Fig. 1: illustrates a flowchart of the method according to the invention.
- Fig. 2: illustrates a schematic diagram the method according to an embodiment of the invention.

### 5. Detailed description of preferred embodiments

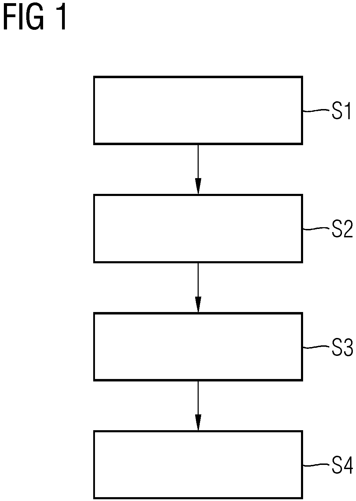

Fig. 1 illustrates a flowchart of the method according to the invention. The method for stepwise accelerating a current speed of a vehicle, comprises the following steps S1 to S3:
a. In a first step the current speed 10 of the vehicle is accelerated until a current number of a unit of measure of the current speed 10 reaches at least one predefined speed step 20, S1.
b. In a second step the acceleration of the current speed 10 of the vehicle is stopped, if the current number of the unit of measure of the current speed 10 equals or exceeds the at least one predefined speed step 20, S2.
c. In a third step the current speed 10 is maintained with the at least one predefined speed step 20, S3.
d. In a last step the at least one predefined speed step 20 is overcome and the current speed 10 of the vehicle is accelerated after performing a predefined action 30, S4.

### Stepwise mode

The stepwise mode 40, enabling the aforementioned method steps S1 to S3 according to the invention, can be set and adjusted in the vehicle configuration system. The vehicle configuration system can be part of the multimedia system of the vehicle. The stepwise mode can be enabled or disabled. In other words, the stepwise mode can be switched between the normal mode and the stepwise mode.

The speed steps 20 can be designed as country-specific. Exemplary speed steps are listed in the following for Germany:
- 30 km/h
- 50 km/h
- 60 km/h
- 70 km/h
- 80 km/h
- 10 km/h
- 120 km/h

Alternatively, a free configurable option can be used for the definition of the speed steps 20. Exemplary speed steps 20 are listed in the following, wherein x, y and z can be variably set and adjusted by a user.
- x km/h
- y km/h
- z km/h

If the stepwise mode 40 is activated, the vehicle will stop accelerating as soon as the speed step 20 is reached. Only after performing a specific action 30 e.g. pressing a button or performing a kickdown, the speed step 20 can be taken or applied and the next step 20 will latch. In the normal mode, the vehicle operates as usual without stepwise acceleration.

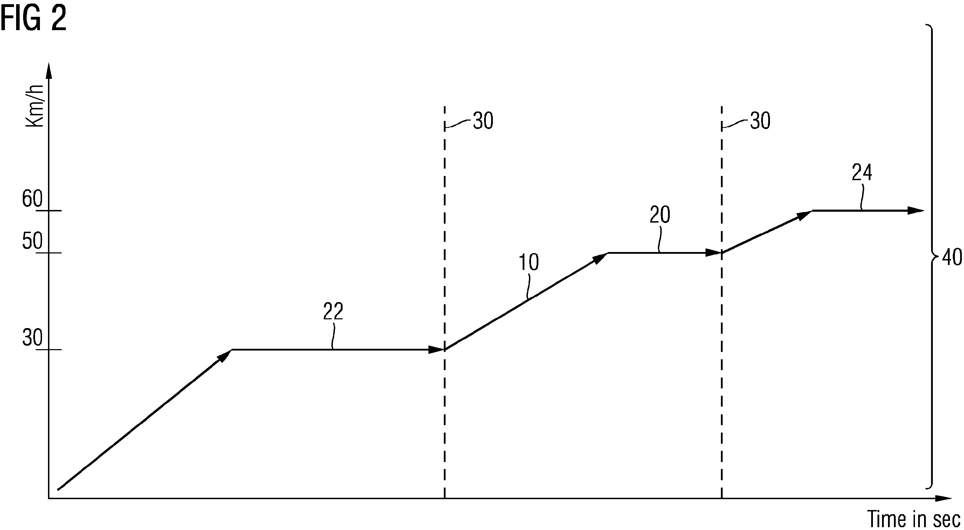

Figure 2 illustrates a schematic diagram of the stepwise acceleration with the speed steps 30 km/h, 50 km/h and 60 km/h, wherein
30 km/h corresponds to the lowest speed step 22 and 60 km/h to the highest speed step 24.

According to Figure 2, in a first step the current speed 10 of the vehicle is accelerated until reaching the first predefined speed step 30 km/h. In a second step, after reaching the predefined speed step 30 km/h, the current speed 10 of the vehicle is no further accelerated, but stopped in this case at 30 km/h and maintained. In a last step, after performing an action or measure 30, the current speed 10 is further accelerated beyond 30 km/h to the next speed step. The method steps S1 to S3 are repeated for each further speed step 20, 24, the second speed step 50 km/h and for the third speed step 60 km/h.

Further pressing down the gas pedal by the driver will not cause any further acceleration. Laying off the gas pedal fully (kickup opposite of kickdown) immediately disables the latch for safety reasons.

The pseudocode can be defined as follows for

### Pseudocode 1 acceleration loop:

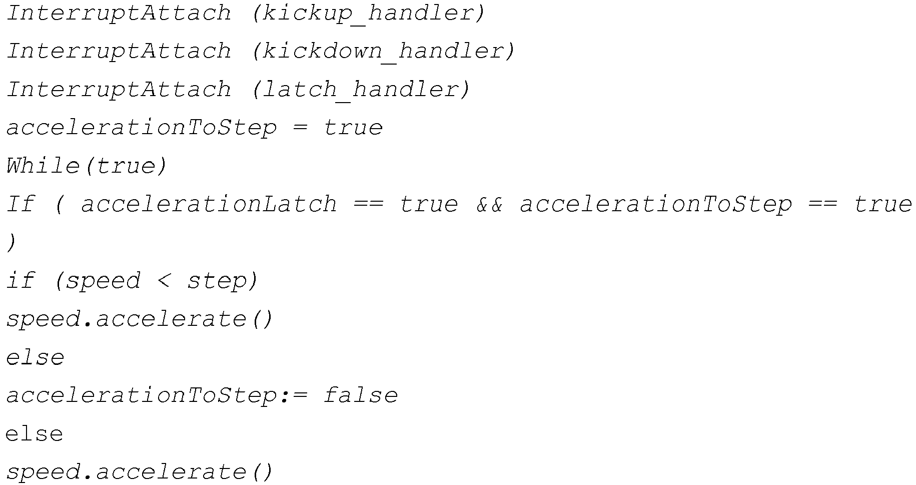

### Pseudocode 2 kickdown handler:

*accelerationToStep:= true*
*step := speed.step_next()*

### Pseudocode 3 kickup handler:

*accelerationToStep:= true*
*accelerationLatch := false*

### Pseudocode 4 latch handler:

*accelerationToStep:= true*
*accelerationLatch := true*
*step: = speed.step_next()*

### Reference signs

- 10: current speed
- 20: speed step
- 22: lowest speed step
- 24: highest speed step
- 30: action
- 40: stepwise mode
- S1 to S4: Method steps 1 to 4

## Claims

1. Computer-implemented method for stepwise accelerating a current speed (10) of a vehicle, comprising the steps:
a. accelerating the current speed (10) of the vehicle until a current number of a unit of measure of the current speed (10) reaches at least one predefined speed step (20) (S1);
b. stopping the acceleration of the current speed (10) of the vehicle, if the current number of the unit of measure of the current speed (10) equals or exceeds the at least one predefined speed step (20) (S2); and
c. maintaining the current speed (10) of the vehicle with the at least one predefined speed step (20) (S3) ; and
d. overcoming the at least one predefined speed step and accelerating the current speed (10) of the vehicle after performing a predefined action (30) (S4).

2. Method according to claim 1, further comprising the steps
Repeating the steps a. to c. for each predefined speed step (20) of a plurality of predefined speed steps (20); wherein
the plurality of predefined speed steps (20) is an ordered array of predefined speed steps (20), starting with the lowest predefined speed step (22) and ending with the highest predefined speed step (24); wherein
the lowest predefined speed step (22) corresponds to the lowest number of the unit of measure of the speed (10) in the array; and
the highest predefined speed step (24) corresponds to the highest number of the unit of measure of the speed (10) of the vehicle in the array.

3. Method according to claim 1 or claim 2, wherein the at least one predefined speed step (20) is a recommended speed limit of at least one country in an associated unity of measure or is free configurable by a user.

4. Method according to any of the preceding claims, wherein performing the predefined action (30) in step d. is selected from the group, comprising
Pressing a button on a touchscreen or other means of the vehicle by a user; and
Performing a kickdown by the user.

5. Method according to any of the preceding claims, wherein the method steps a. to d. are performed depending on a stepwise mode (40);
Enabling the performance of the method steps, if the stepwise mode (40) is activated;
Disabling the performance of the method steps, if the stepwise mode (40) is deactivated or after a kickup by the user.

6. Method according to claim 5, wherein the stepwise mode (40) can be set and/or adapted by the user.

7. A computer program product directly loadable into an internal memory of a computer, comprising software code portions for performing the steps according to any one of the preceding claims when said computer program product is running on a computer.

8. Vehicle configuration unit for performing the method steps according to any one of the claims 1 to 6.
